# EUROPEAN PATENT SPECIFICATION

(11) **EP 2 092 120 B1**
(45) Date of publication and mention of the grant of the patent: **30.07.2014**
(21) Application number: 07848002.7
(22) Date of filing: 07.12.2007
(51) Int. Cl.: E01B 35/12, G01B 7/16

(54) **SYSTEM FOR MONITORING THE SUBSIDENCES OF A BALLAST OF A TRACK OVER A GREAT DISTANCE**
SYSTEM ZUR ÜBERWACHUNG VON ABSENKUNGEN EINER SCHIENENBETTUNG ÜBER GROSSE STRECKEN
SYSTÈME POUR CONTRÔLER LES AFFAISSEMENTS D'UN BALLAST D'UNE VOIE SUR UNE LONGUE DISTANCE

(30) Priority: 08.12.2006 FR 0610740
(43) Date of publication of application: 26.08.2009
(73) Proprietor: Bouygues Travaux Publics, 78280 Guyancourt (FR); Brownline B.V., 4231 ZD Meerkerk (NL); Imar Gmbh, Gesellschaft Für Inertiale Mess- Automatisierungs- Und Regelsysteme mbH, 66386 St Ingbert (DE)
(72) Inventor: WEICK, Michel, 92500 Rueil Malmaison (FR); CARAIL, Christian, 95430 Auvers Sur Oise (FR); DE BROISSIA, Michel, 78180 Montigny Le Bretonneux (FR); DE BRUIN, Hans, 4231ZD Meerkerk (NL); WESSELINK, Albert, WYK en AALBURG (NL); VON HINÜBER, Edgar, 66386 St. Ingberg (DE)
(74) Representative: Regimbeau
(86) International application number: PCT/EP2007/063556
(87) International publication number: WO 2008/068342

(56) References cited:
- EP-A- 0 930 491
- DE-U1- 29 620 261
- FR-A- 2 418 441

## Description

The invention relates to a train track comprising ballast and a system for monitoring possible subsidences of the ballast of a track over great distances.

A monitoring device comprising a grid set-up under the ballast is known from document DE-U-29620261 which is considered the closest prior art to the subject-matter of claim 1. This grid is made of optical or electrical cables extending under the ballast and crossing each other. Properties of said cables, such as their optical transmission or their electrical resistance, are measured in order to evaluate the ballast deformations.

However, the integration under the ballast of active elements such as said optical or electrical cables is usually considered as a drawback in terms of security and maintenance.

Further, with such a device where the cables have several hundred meters length, a brake anywhere within the grid leads to a general loss of information on a subsequent part of the grid.

The purpose of the invention is to provide a high-performance system that does not present the drawbacks of the prior art systems, is easy to implement, easy to control and easy to maintain, in order to reduce risks inherent to disorders induced by sinkholes and dolines occurrence.

To theses aims, the invention proposes a system for monitoring possible subsidences of the ballast of a track comprising:
- transversal mechanical elements extending under the ballast and subjected to traction in the event of a subsidence in the tie of the ballast in the vicinity of said transversal elements,
- strain gauges which are fixed on said cables and which produce signals in reaction to the tension subjected by the transversal elements, and
- processing means to which said strain gauges are connected, said means processing their signals to detect the subsidences.

Such a system permits to detect any significant movement under the railway ballast.

It will be further noted that with such a system with transversal mechanical elements and strain gauges, there are only passive elements under the ballast: the transversal elements, which transmit a mechanical tension to the strain gauges, no measurement being thus done under the ballast.

Maintenance and security are therefore enhanced.

The transversal mechanical elements can be steel cables, preferably stainless steel cables.

They can be placed in tubes extending under the ballast, for example made from polyethylene. Such tubes permit an easy change of the defective cable(s).

The system can also comprise:
- longitudinal strips on each side of the ballast, said longitudinal strips forming a grid with the transversal elements and being deformed in the event of a subsidence occurring in the vicinity of the longitudinal strips,
- strain gauges fixed in the length of these longitudinal strips and which produce signals in reaction to the deformation subjected by the longitudinal strips, and
- said strain gauges being connected to the processing means, said means processing their signals to detect the subsidences these signals to detect the subsidences.

It is however important to note that the use of such longitudinal strips is only optional.

The system proposed may also advantageously be complemented by the following features:
- the strain gauges arranged on the transversal cables and/or on the longitudinal strips form a group of strain gauges operating in parallel;
- seismic accelerometers are able to detect deep collapses in the ground;
- the opposite transversal cables are connected by traction bars arranged in the ballast under the track;
- the longitudinal strips and the transversal cables carrying the sealed strain gauges are arranged directly on the ground or in superficial excavations and are covered over;
- the strain gauges are fixed on the longitudinal strips, four gauges per longitudinal strip of five meters;
- the strain gauges are fixed on the transversal cables, two gauges per transversal cable;
- each transversal cable is fixed to one longitudinal strip;
- the seismic accelerometers are distributed approximately one accelerometer on each side of the ballast every 150 meters of ballast;
- measuring stations are distributed at intervals along the ballast, with each measuring station supplying the strain gauges, comprising a micro-controller with local specification, collecting the information from the strain gauges and the seismic accelerometers and communicating via optical fibre with a data acquisition system;
- a measuring station is arranged at each end of a ballast length of 100 meters, and a seismic accelerometer is arranged on each side of the ballast in this length and at each station;
- a measuring station is arranged at each end of a 400 meter-length of ballast, and three seismic accelerometers are distributed on each side of the ballast in this length;
- four measuring stations are distributed in a ballast length of 900 meters and six seismic accelerometers are arranged on each side of the ballast in this length;
- four measuring stations are distributed in a ballast length of 1300 meters and nine seismic accelerometers are arranged on each side of the ballast in this length;
- a warning and locating signal is produced for any detected subsidence exceeding a predetermined threshold;
- the strain gauges and the accelerometers are supplied using two independent electrical energy sources controlled by two independent micro-controllers per ballast length of at most equal to 400 meters;
- the strain gauges are fixed to transversal cables and to longitudinal strips and the information provided by the strain gauges fixed to a same transversal cable or a same longitudinal strip is compared with the measurements provided by the seismic accelerometers when trains pass to confirm the operating state of the strain gauges.

The invention shall be further explained hereinafter in reference to the figures of the attached drawing wherein:
- figure 1 is a schematic diagram of a railway cross-section with a monitoring system according to one embodiment of the invention ;
- figure 2 is a schematic diagram illustrating another view of the monitoring system with the transversal cross cables as shown in figure 1;
- figure 3 is a schematic representation of a surface station of a system as represented in Figure 1 and 2;
- figure 4 is a schematic representation illustrating the data collection in a system as in Figure 1 and 2;
- figure 5 is a diagram of the effect of a subsidence incident along the ballast;
- figure 6 is a diagram of the effect of a subsidence incident in the tie of the ballast;
- figure 7 is a diagram of a longitudinal strip carrying four strain gauges;
- figure 8 is a diagram of a longitudinal strip carrying four strain gauges crossed with a transversal cable carrying two strain gauges;
- figure 9 is a diagram of the disposition and of the supply of strain gauges carried by transversal cables and longitudinal strips in a predetermined length of ballast;
- figure 10 is a diagram of the power supply and signal transmission links of a set of four strain gauges carried by a same longitudinal strip;
- figure 11 is a diagram of the power supply and signal transmission links of two opposite accelerometers;
- figure 12 is a diagram of a length of ballast between two stations, and
- figure 13 is a diagram of a station.

The following marking is used on the drawings:
- the train track is marked (T)
- the strain gauges are marked (1),
- the longitudinal strips, when present and on which strain gauges are fixed, are marked (2).
- the transversal cables, on which the strain gauges are fixed, are marked (3),
- the tubes in which said transversal cables 3 extend are marked (3a),
- the tensioning mechanism is marked (3b),
- the concrete nodes or boxes are marked (B)
- the seismic accelerometers are marked (4),
- the ballast is marked (5),
- the measuring surface stations are marked (6),
- the power lines are marked (7),
- the signal transmission lines are marked (8),
- the data acquisition system is marked (10),
- a longitudinal subsidence of the ballast is marked (11),
- a transversal subsidence under the ballast is marked (12),
- the geotextile is marked (13),
- the sand layer is marked (14),
- the two Wheatstone bridges are marked (15;16),
- the interfaces are marked (17),
- the micro-controllers are marked (18),
- the energy sources are marked (19),
- the tractions bars are marked (20).

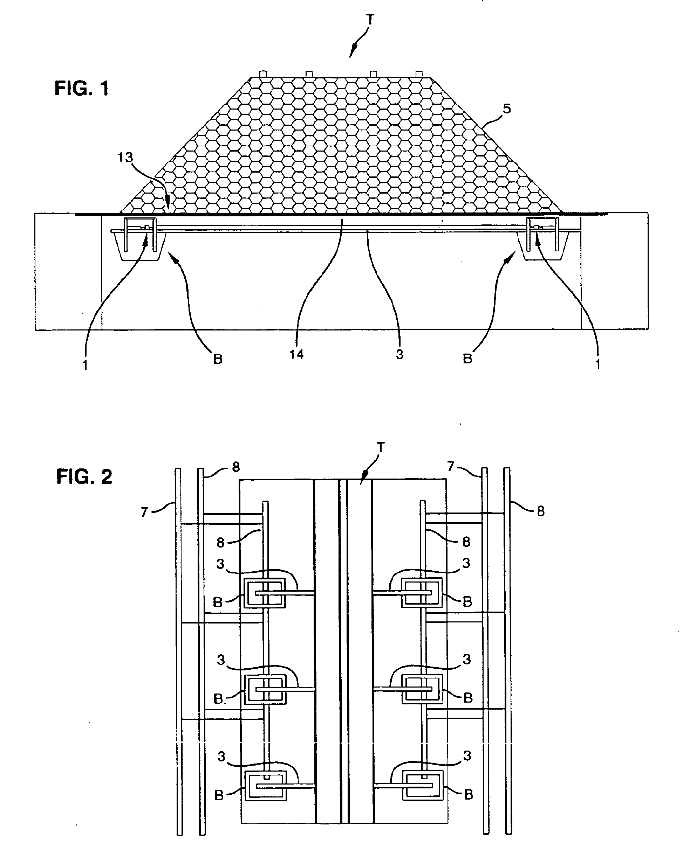

A ground monitoring system as represented on figures 1 and 2 mainly comprises mechanical elements 3, which extend transversally under the ballast 5 in such a way that said transversal elements 3 are subjected to traction in the event of a subsidence in the tie of the ballast 5 in the vicinity of the transversal cables 3. Such mechanical elements are for example metal or steel cables that are tightened below the ballast 5. Strain gauges 1 are fixed to these transversal elements 3 in order to react to any variation of the strain supported by said transversal elements 3. The signals produced by said gauges 1 are then processed to detect the subsidences, sinkholes or dolines that can occur. Practically, below the railway, the sinkholes cause deformations, which cause pulling forces measured by the strain gauges 1.

The strain gauges 1 are glued at the ends of the transversal elements 3 on each side outside the ballast 5. Said transversal elements 3 are tensioned at their ends in concrete footings (nodes or boxes B). That way, the strains are reported to both sides of the ballast 5, at both locations where electric and communication circuits 7 and 8 are interconnected with the strain gauges 1. The strain gauges 1 are actually set-up on each side of the transversal cable 3 in order to monitor a strain variation due to some settlement in-between both nodes B. The strain gauges 1 are preferably two per transversal cable 3, one strain gauge 1 at each end of the transversal cable 3.

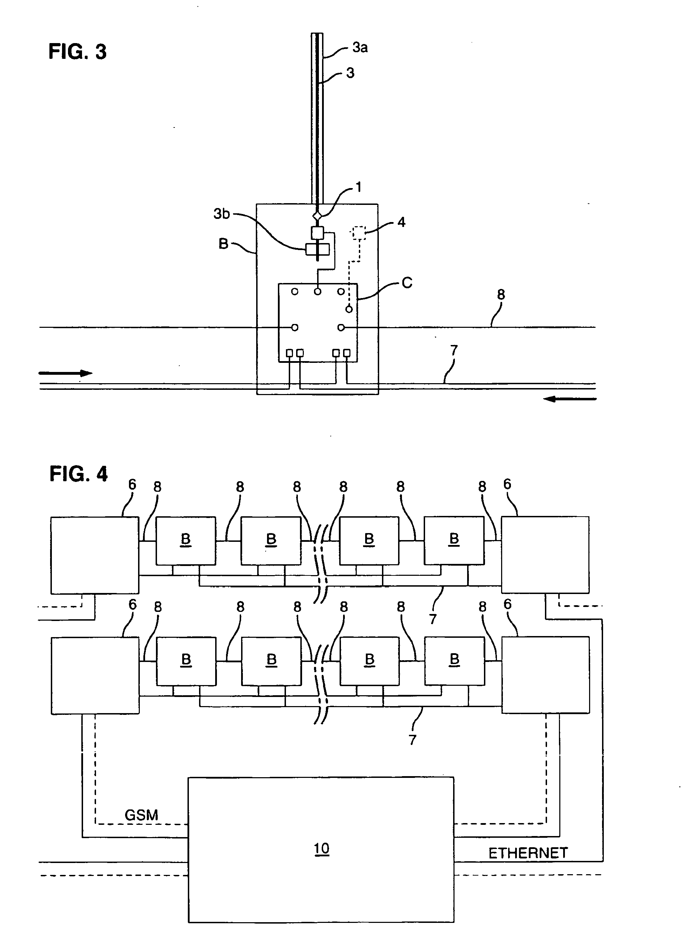

The transversal cables 3 are preferably made of stainless steel. To avoid a too high friction in the ground, the transversal elements 3 can be installed in tubes 3a (see figure 3), for example made of polyethylene (HDPE). That way, in the event a malfunction is detected, it is very easy to change the defective cable(s) by pulling it out of its tube and replacing it.

The transversal cables 3 and their tubes 3a are arranged directly on the ground or in superficial excavations and are buried in the ground at such a depth that soft, small granular, soil on the top can develop sufficient weight, such that the transversal cables 3 deform when a settlement is formed. A geotextile 13 is set-up over a sand layer 14 and over the platform level just a few centimetres above the transversal cables 3 to ensure a good transmission of deformation.

Said transversal or cross cables are 4 mm in diameter and are buried every 5 m below the railway (train track T), at the base of the embarkment. They are connected at their ends to the concrete boxes or nodes B, where they are pre-tensioned through a tensioning mechanism 3b. Said boxes B also include a control card with C connectors to the power line 7 as well as with connectors with a communication line 8 (RS 422).

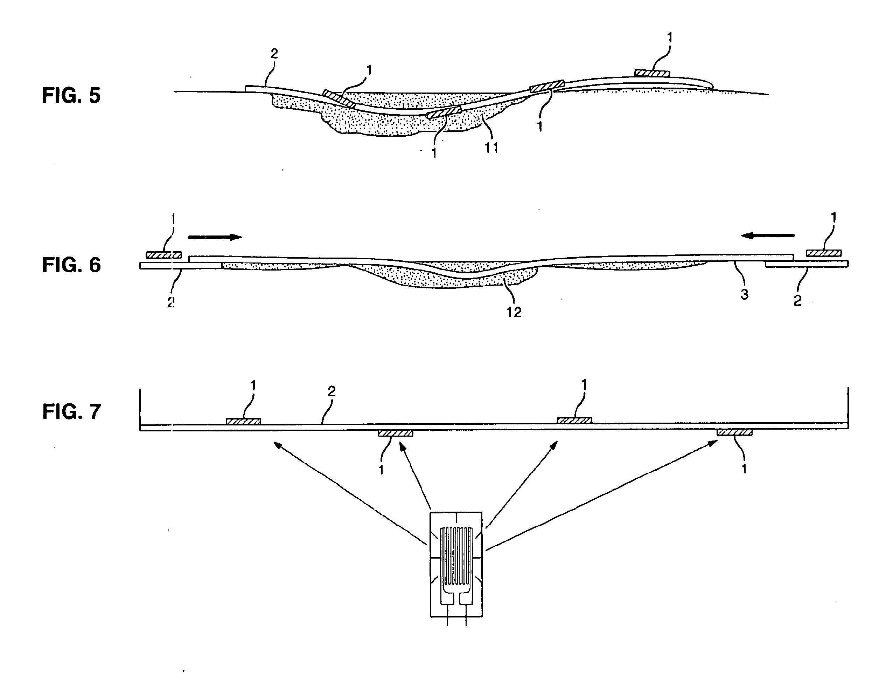

Some of the boxes (5 under 120 - 1 each 75 m) are also equipped with a 3 axis accelerometer 4 (which is used as is more particularly described later on, with reference with figure 5 and following).

As can be seen on Figure 4, said concrete boxes or nodes B are electrically and via the RS422 connected to ground measuring stations 6 (surface stations) which themselves exchange with a central data collection station 10 which gathers all data from the surface stations 6. Said central station 10 includes interface means such as displays and keyboards, for checking all measured data, doing local signal analysis and reading alarm messages. The ground stations 6 can generate warning and locating signals/messages for any subsidence exceeding a predetermined threshold detected by a gauge 1. They send said alarm signals/messages via SMS or email (GSM channel) to the central station 10. An Ethernet channel is also used as a second communication channel.

The surface station 10 is for example installed at the extremities of any continuous section along the railway, at the end of a section. When the section is longer than 400 m, a surface station can be placed every 400 m distance.

In an other embodiment illustrated on figure 5 and following, longitudinal strips 2 extend on each side of the ballast and on its entire length, in such a way that it forms a grid with the transversal elements 3. Said longitudinal strips 2 are deformed in the event of a subsidence occurring in their vicinity. Strain gauges 1 are fixed in the length of these longitudinal strips 2 in such a way that the strain gauges 1 react to the deformation subjected by the longitudinal strips by producing signals; and to exploit these signals to detect the subsidences.

The strain gauges 1 are preferably four per longitudinal cable 2 and are regularly glued along the entire length of the longitudinal strip 2.

Thus, figure 5 is a diagram explaining how a longitudinal subsidence 11 along the ballast 5 deforms a longitudinal strip 2. The resulting deflection is measured by four strain gauges 1 fixed to the longitudinal strip 2.

Figure 6 is a similar diagram explaining how a transversal subsidence 12 in the tie of the ballast 5 deforms a transversal cable 3 by pulling it from both strain gauges 1 located at its two ends, and thus by kind of shortening it, creating traction forces, which are measured by the strain gauges 1.

A representation of a disposition of four strain gauges 1 on a longitudinal strip 2 of a length of 5 meters can be seen on figure 7. As an example, a longitudinal strip 2 can be made of aluminium, its width being two centimetres and its thickness is three millimetres. The sensitivity is one millimetre of deflection per five-metre longitudinal strip 2. The strain gauges 1 provide 30 microstrains for one millimetre of subsidence.

The longitudinal strips 2 are sealed and protected.

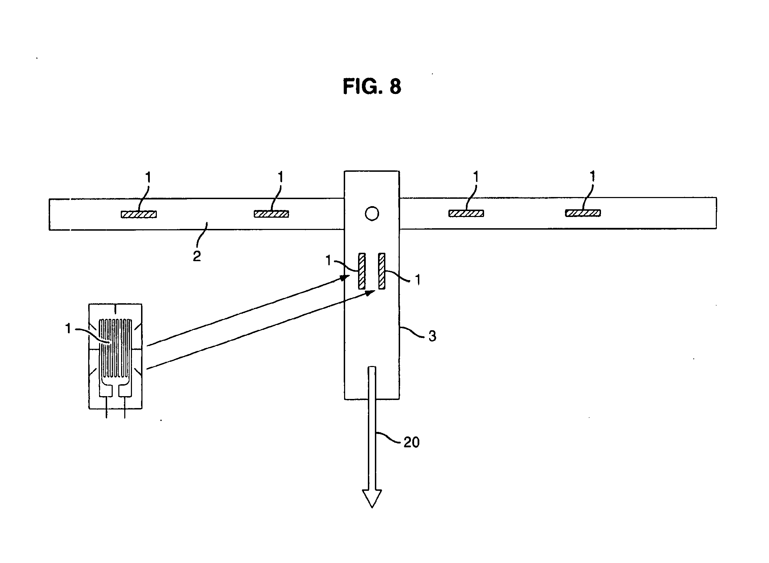

In this example, every transversal cable 3 is fixed at one end to a longitudinal cable 2. In particular, Figure 8 is a diagram of a unit including a longitudinal strip 2 and a transversal cable 3 fixed at one end to the longitudinal strip 2 at the midpoint thereof. A traction bar 20 connects this transversal cable 3 at its other end to the opposite transversal cable 3.

The transversal cables 3 are buried every 5 m below the ballast 5 and, as the longitudinal strips 2 are preferably about 5-meter length, only one transversal cable 3 shall be fixed to each longitudinal strip 2. Depending on the risk level, the transversal cables 3 can also be buried every 2 or 10 m for example. The transversal cables 3 have preferably a diameter of about 4 mm.

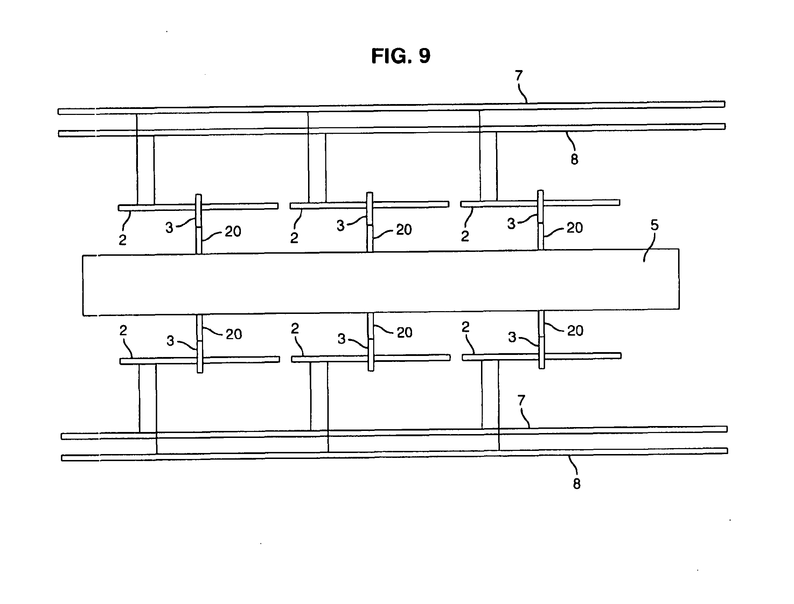

All longitudinal strips 2 are connected to a power line 7 and to a signal transmission line 8 on both sides of the ballast 5. Thus, on each side of the ballast 5, one power line 7 supplies all longitudinal strips 2 located on the corresponding side of the ballast 5 and one signal transmission line 8 collects the information provided by all longitudinal strips 2 located on the corresponding side of the ballast 5. This configuration can be seen on figure 9, which is a general representation of a series of five-metre longitudinal strips 2 stepped along a section of ballast 5 on each side of the ballast 5, of transversal cables 3 connected two-by-two with traction bars 20 and each transversal cable 3 being connected to one longitudinal strip 2 at its middle point.

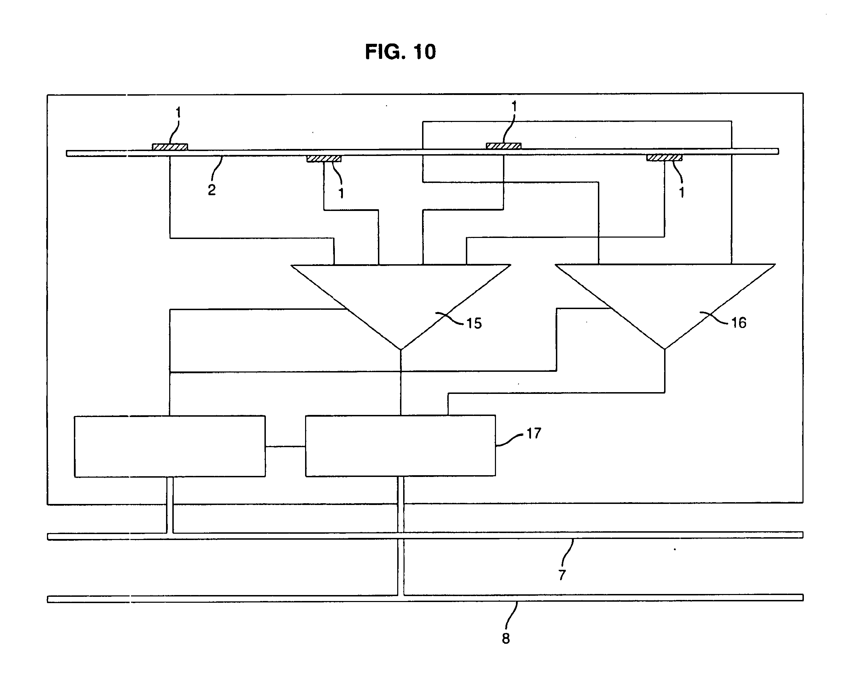

The strain gauges 1 are exploited in such a way that each group of strain gauges 1 of a same longitudinal strip 2 or of a same transversal cable 3 provides a common signal, which is then collected by a Wheatstone bridge 15 and transmitted to an interface 17 connected to one of the two signal transmission lines 8. As can be seen on figure 10, this interface 17 is also connected to another interface 17, which is connected to one of the two power lines 7. The electrical device of figure 10, which is applied to the four strain gauges 1 of a longitudinal strip 2, includes another Wheatstone bridge 16, which collects the information of only two strain gauges 1 of the longitudinal strip 2 and forwards this information to said two interfaces 17, which are both connected to the power line 7 and to the signal transmission line 8.

In order to control that the strain gauges 1 work properly, seismic accelerometers 4 with a high bandwidth are arranged at intervals on each side of the ballast 5. Every time a train passes, strain gauges 1 register a measure of the tension or strain of the transversal cables 3, which is then compared to the measure of the tension registered by the seismic accelerometers 4. That way, it is possible to calibrate the deflections measured by the strain gauges 1 and to filter their response when trains are passing.

The seismic accelerometers 4 possibly register also any vibration due to collapses in the ground, so that it is possible to detect a deep collapse before it actually occurs at the surface.

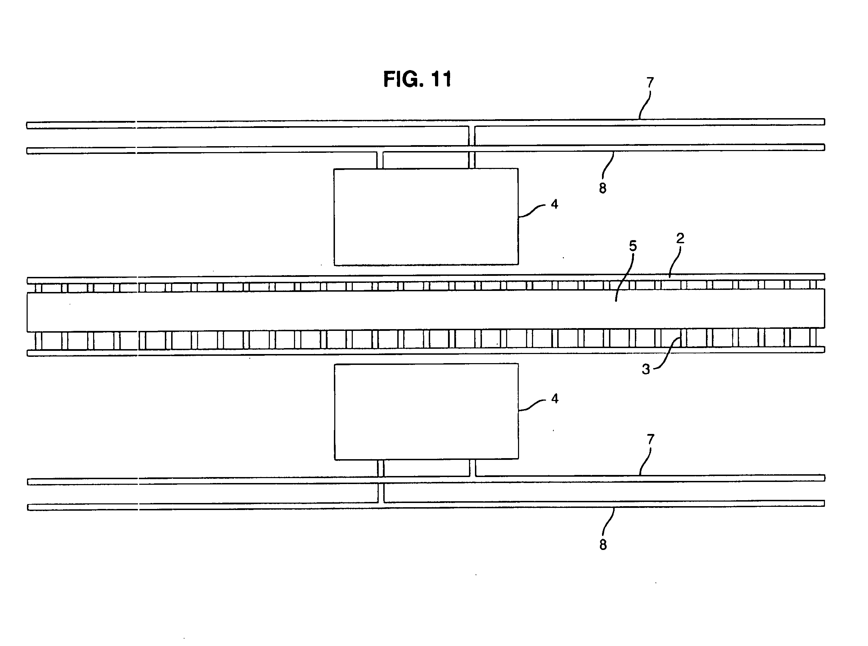

A diagram of the power supply and of the signal transmission of two seismic accelerometers 4 can be seen on figure 11. The two seismic accelerometers 4 are arranged in opposition with one another on both sides of a section of the ballast 5 and are both connected to the corresponding power line 7 and to the corresponding signal transmission line 8.

According to a preferred embodiment, the seismic accelerometers 4 are distributed approximately one seismic accelerometer 4 on each side of the ballast 5 every 150 meters of the ballast 5, meaning the seismic accelerometers 4 are located every 75 m alternatively position right and left of the ballast 5.

The seismic accelerometers 4 are only optional, but contribute - as additional elements - to insure the good operating state of the strain gauges 1. They also have the ability of detecting deep collapses in the ground before they occur at the surface, it is clear to a Man of the Art that such seismic accelerometers 4 can be used in many other applications.

Measuring stations 6 are distributed at intervals along the ballast 5, with each measuring station 6 supplying the strain gauges 1, comprising a surface micro-controller 18 with local specification, collecting the information from the strain gauges 1 and the seismic accelerometers 4, and communicating via optical fibre with a data acquisition system 10, using for example Ethernet protocol.

The strain gauges 1 and the seismic accelerometers 4 are preferably supplied using two independent electrical energy sources controlled by two independent micro-controllers 18 per ballast 5 length of at most equal to 400 meters.

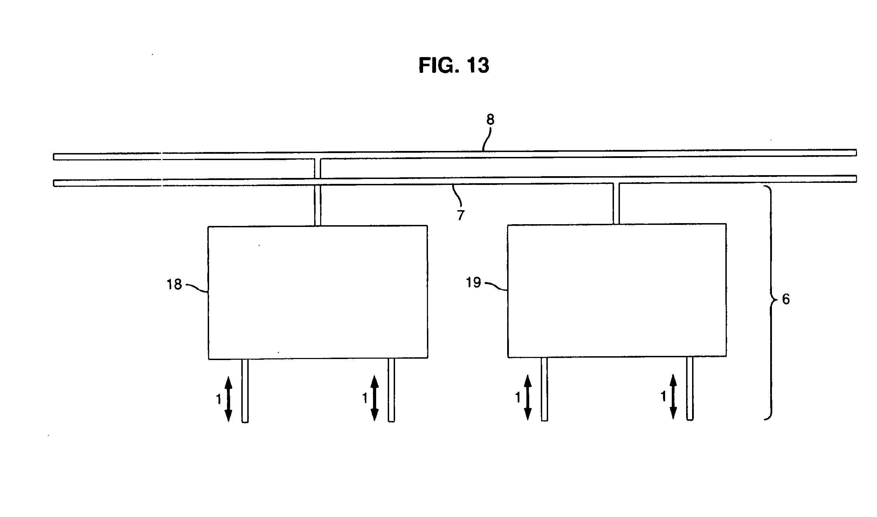

A diagram of a measuring station 6 can be seen on figure 13. The measuring station 6 comprises a micro-controller 18 with local memory that receives the signals from the longitudinal strips 2 and transversal cables 3, and a source of energy 19 to supply the longitudinal strips 2 and transversal cables 3. The micro-controller 18 is connected via an optical fibre to the acquisition system.

A measuring station 6 is arranged at each end of a ballast length of 100 meters, and a seismic accelerometer 4. is arranged on each side of the ballast 5 in this length and at each measuring station 6.

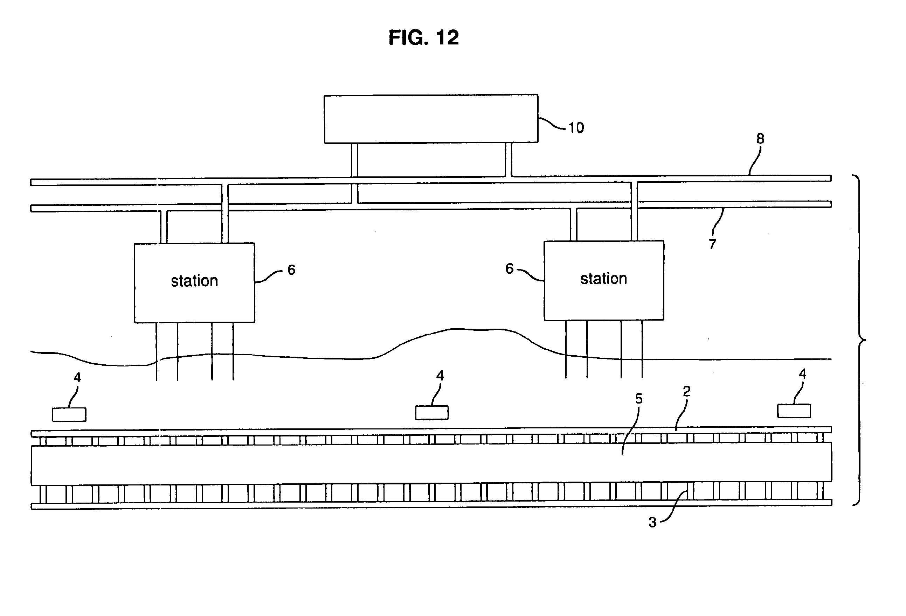

In a preferred embodiment of the invention that can be seen on figure 12, a measuring station 6 is arranged at each end of a 400-metre length of ballast 5, and three seismic accelerometers 44 are distributed on each side of the ballast 5 in this length. A measuring station 6 is preferably always installed at the end of a section. When the section is longer than 400 meters, a measuring station 6 is placed every 400 meter-distance or in the middle of a section.

In the case of a 900-metre length of the ballast 5, four measuring stations 6 are distributed in this ballast length and six seismic accelerometers 4 are arranged on each side of the ballast 5 in this length.

In the case of a 1300-metre length of the ballast 5, four measuring stations 6 are distributed in this ballast length and nine seismic accelerometers 4 are arranged on each side of the ballast 5 in this length.

The measurement system is self-monitoring. Maintenance is required for repairs on base of the alarms generated by the self-monitoring system. Monthly checks of the entire system via a data acquisition system menu are required. At the measuring station 6, a laptop can be connected for service operations. No data are stored on the local measuring station 6 to keep the maintenance by external inspection tasks as low as possible.

The electronic systems of the ground settling measurement system are designed for the electromagnetic environment as exists due to the electromagnetic fields developed by the railway system.

The underground-buried arts are designed for underground silt water environment.

The invention is of course not limited to the embodiments that have been described, but is extendible to any other variant conform to it and defined by claim 1.

## Claims

1. Train track (T) comprising ballast (5), a system for monitoring possible subsidences of said ballast (5) of the tracks, and transversal mechanical elements (3) extending under the ballast (5) and subjected to traction in the event of a subsidence in a tie of the ballast (5) in the vicinity of said transversal mechanical elements (3), **characterized in that** it comprises:
strain gauges (1) which are fixed to said transversal mechanical elements (3) and which produce signals in reaction to the tension subjected by the transversal mechanical elements (3), and processing means to which said strain gauges (1) are connected, said means processing their signals to detect the subsidences.

2. Train track (T) according to claim 1, **characterized in that** said transversal mechanical elements (3) are steel cables.

3. Train track (T) according to claim 1, **characterized in that** it further comprises:
- longitudinal strips (2) on each side of the ballast (5), said longitudinal strips (2) forming a grid with the transversal mechanical elements (3) and being deformed in the event of a subsidence occurring in the vicinity of the longitudinal strips (2),
- strain gauges (1) fixed in the length of these longitudinal strips (2) and which produce signals in reaction to the deformation subjected by the longitudinal strips (2), and
- said strain gauges (1) being connected to the processing means, said means processing these signals to detect the subsidences.

4. Train track (T) according to claim 3, **characterized in that** the strain gauges (1) are grouped to provide a common signal, and **in that** it comprises seismic accelerometers (4) arranged at intervals on each side of the ballast (5) and means to exploit the signals provided by these seismic accelerometers (4) when trains pass, in order to control the proper operation of the gauges (1).

5. Train track (T) according to claim 4, **characterized in that** the seismic accelerometers (4) are able to detect deep collapses in the ground.

6. Train track (T) according to claim 2, **characterized in that** the opposite transversal cables (3) are connected by traction bars (20) arranged in the ballast (5) under the track.

7. Train track (T) according to claim 2 or 3 taken in combination with claim 2, **characterized in that** the longitudinal strips and the transversal cables carrying the sealed strain gauges are arranged directly on the ground or in superficial excavations and are covered over.

8. Train track (T) according to claims 3, 4 or 7, **characterized in that** the strain gauges (1) are fixed on 5-meter longitudinal strips (2), four gauges (1) per strip (2).

9. Train track (T) according to claims 2, 4 taken in combination with claim 2 or 7, **characterized in that** the strain gauges (1) are fixed on the transversal cables(3), two gauges (1) per transversal cable(3).

10. Train track (T) according to claims 2 and 3 taken in combination with claim 2, **characterized in that** each transversal cable (3) is fixed to one longitudinal strip (2).

11. Train track (T) according to claim 4 or 5, **characterized in that** the seismic accelerometers (4) are distributed approximately one seismic accelerometer (4) on each side of the ballast (5) every 150 meters of ballast (5).

12. Train track (T) according to claim 4, **characterized in that** measuring stations (6) are distributed at intervals along the ballast (5), with each measuring station (6) supplying the strain gauges (1), comprising a micro-controller(18) with local specification, collecting the information from the strain gauges (1) and the seismic accelerometers (4) and communicating via optical fibre with a data acquisition system (10).

13. Train track (T) according to claim 1, **characterized in that** a warning and locating signal is produced for any detected subsidence exceeding a predetermined threshold.

14. Train track (T) according to claim 1, **characterized in that** the strain gauges (1) and the accelerometers (4) are supplied using two independent sources of electrical energy (19) controlled by two independent micro-controllers (18) per length of ballast (5) equal to at most 400 meters.

15. Train track (T) according to claim 2, **characterized in that** the strain gauges (1) are fixed to transversal cables (3) and to longitudinal strips (2) and the information provided by the strain gauges (1) fixed to a same transversal cable (3) or a same longitudinal strip (2) is compared with the measurements provided by the seismic accelerometers (4) when trains pass to confirm the operating state of the strain gauges (1).

## Patentansprüche

1. Bahngleis (T) mit einem Schotterbett (5), einem System zum Überwachen möglicher Absenkungen des Schotterbetts (5) des Bahngleises und mit sich unter dem Schotterbett (5) in Querrichtung erstreckenden mechanischen Elementen (3), die im Fall einer Absenkung in einem Abschnitt des Schotterbetts (5) in der Nähe der sich in Querrichtung erstreckenden mechanischen Elemente (3) eine Zugspannung erfahren,
**gekennzeichnet durch**:
Dehnungsmessstreifen (1), die an den sich in Querrichtung erstreckenden mechanischen Elementen (3) befestigt sind und in Antwort auf die Zugspannung, die die sich in Querrichtung erstreckenden mechanischen Elemente (3) erfahren, Signale erzeugen; und
eine Verarbeitungseinrichtung, mit der die Dehnungsmessstreifen (1) verbunden sind, wobei die Verarbeitungseinrichtung ihre Signale verarbeitet, um die Absenkungen zu erfassen.

2. Bahngleis (T) nach Anspruch 1, **dadurch gekennzeichnet, dass** die sich in Querrichtung erstreckenden mechanischen Elemente (3) Stahlkabel sind.

3. Bahngleis (T) nach Anspruch 1, **dadurch gekennzeichnet, dass** das Bahngleis ferner aufweist:
- sich in Längsrichtung erstreckende Bänder (2) auf jeder Seite des Schotterbetts (5), wobei die sich in Längsrichtung erstreckenden Bänder (2) in Kombination mit den sich in Querrichtung erstreckenden mechanischen Elementen (3) ein Gitter bilden und im Fall einer in der Nähe der sich in Längsrichtung erstreckenden Bänder (2) auftretenden Absenkung verformt werden;
- Dehnungsmessstreifen (1), die in der Länge der sich in Längsrichtung erstreckenden Bänder (2) befestigt sind und in Antwort auf die Verformung, die die sich in Längsrichtung erstreckenden Bänder (2) erfahren, Signale erzeugen,
- wobei die Dehnungsmessstreifen (1) mit der Verarbeitungseinrichtung verbunden sind, und wobei die Verarbeitungseinrichtung diese Signale verarbeitet, um die Absenkungen zu erfassen.

4. Bahngleis (T) nach Anspruch 3, **dadurch gekennzeichnet, dass**
die Dehnungsmessstreifen (1) gruppiert sind, um ein gemeinsames Signal zu erzeugen; und das Bahngleis seismische Beschleunigungsmesser (4) aufweist, die auf jeder Seite des Schotterbetts (5) in Intervallen angeordnet sind, und eine Einrichtung zum Auswerten der durch die seismischen Beschleunigungsmesser (4) erzeugten Signale, wenn Züge passieren, um zu kontrollieren, ob die Dehnungsmessstreifen (1) geeignet funktionieren.

5. Bahngleis (T) nach Anspruch 4, **dadurch gekennzeichnet, dass** die seismischen Beschleunigungsmesser (4) dazu geeignet sind, tiefe Einstürze in den Boden zu erfassen.

6. Bahngleis (T) nach Anspruch 2, **dadurch gekennzeichnet, dass** die einander gegenüberliegenden, sich in Querrichtung erstreckenden Kabel (3) durch im Schotterbett (5) unter dem Bahngleis angeordnete Zugstangen (20) verbunden sind.

7. Bahngleis (T) nach Anspruch 2 oder 3 in Kombination mit Anspruch 2, **dadurch gekennzeichnet, dass** die sich in Längsrichtung erstreckenden Bänder und die sich in Querrichtung erstreckenden Kabel, die die versiegelten Dehnungsmessstreifen tragen, direkt auf dem Boden oder in oberflächlichen Ausschachtungen angeordnet und abgedeckt sind.

8. Bahngleis (T) nach einem der Ansprüche 3, 4 oder 7, **dadurch gekennzeichnet, dass** pro Band (2) vier Dehnungsmessstreifen (1) auf 5 Meter langen, sich in Längsrichtung erstreckenden Bändern (2) befestigt sind.

9. Bahngleis (T) nach Anspruch 2, 4 in Kombination mit Anspruch 2 oder 7, **dadurch gekennzeichnet, dass** die Dehnungsmessstreifen (1) an den sich in Querrichtung erstreckenden Kabeln (3) derart befestigt sind, dass zwei Dehnungsmessstreifen (1) pro sich in Querrichtung erstreckendem Kabel (3) angeordnet sind.

10. Bahngleis (T) nach Anspruch 2 oder 3 in Kombination mit Anspruch 2, **dadurch gekennzeichnet, dass** jedes sich in Querrichtung erstreckende Kabel (3) an einem sich in Längsrichtung erstreckenden Band (2) befestigt ist.

11. Bahngleis (T) nach Anspruch 4 oder 5, **dadurch gekennzeichnet, dass** die seismischen Beschleunigungsmesser (4) auf jeder Seite des Schotterbetts (4) in Abständen von etwa 150 Metern des Schotterbetts (5) angeordnet sind.

12. Bahngleis (T) nach Anspruch 4, **dadurch gekennzeichnet, dass** Messstationen (6) in Intervallen entlang des Schotterbetts (5) angeordnet sind, wobei jede Messstation (6) die Dehnungsmessstreifen (1) versorgt und einen Mikrocontroller (18) mit einer Ortsspezifikation aufweist, der Information von den Dehnungsmessstreifen (1) und von den seismischen Beschleunigungsmessern (4) abruft und über eine Lichtleitfaser mit einem Datenerfassungssystem (10) kommuniziert.

13. Bahngleis (T) nach Anspruch 1, **dadurch gekennzeichnet, dass** für jedwede erfasste Absenkung, die einen vorgegebenen Schwellenwert überschreitet, ein Warn- und Ortsbestimmungssignal erzeugt wird.

14. Bahngleis (T) nach Anspruch 1, **dadurch gekennzeichnet, dass** die Dehnungsmessstreifen (1) und die Beschleunigungsmesser (4) unter Verwendung zweier unabhängiger elektrischer Energiequellen (19) versorgt werden, die durch zwei unabhängige Mikrocontroller (18) pro Länge des Schotterbetts (5) von höchstens 400 Metern gesteuert werden.

15. Bahngleis (T) nach Anspruch 2, **dadurch gekennzeichnet, dass** die Dehnungsmessstreifen (1) an sich in Querrichtung erstreckenden Kabeln (3) und sich in Längsrichtung erstreckenden Bändern (2) befestigt sind und die Information, die durch die am gleichen sich in Querrichtung erstreckenden Kabel (3) oder am gleichen sich in Längsrichtung erstreckenden Band (2) befestigten Dehnungsmessstreifen (1) bereitgestellt wird, mit Messwerten verglichen wird, die durch die seismischen Beschleunigungsmesser (4) bereitgestellt werden, wenn Züge passieren, um den Betriebszustand der Dehnungsmessstreifen (1) zu erfassen.

## Revendications

1. Voie ferroviaire (T) comprenant du ballast (5), un système pour surveiller d'éventuels affaissements dudit ballast (5), et des éléments mécaniques transversaux (3) s'étendant sous le ballast (5) et soumis à une traction en cas d'affaissement dans une traverse du ballast (5) dans le voisinage desdits éléments mécaniques transversaux (3), **caractérisée en ce qu'**elle comprend :
des jauges de contrainte (1) qui sont fixées auxdits éléments mécaniques transversaux (3) et qui produisent des signaux en réponse à la tension à laquelle sont soumis les éléments mécaniques transversaux (3), et des moyens de traitement auxquels lesdites jauges de contrainte (1) sont connectées, lesdits moyens traitant leurs signaux pour détecter les affaissements.

2. Voie ferroviaire (T) selon la revendication 1, **caractérisée en ce que** lesdits éléments mécaniques transversaux (3) sont des câbles en acier.

3. Voie ferroviaire (T) selon la revendication 1, **caractérisée en ce qu'**elle comprend en outre :
- des bandes longitudinales (2) de chaque côté du ballast (5), lesdites bandes longitudinales (2) formant une grille avec les éléments mécaniques transversaux (3) et étant déformées en cas d'un affaissement se produisant dans le voisinage des bandes longitudinales (2),
- des jauges de contrainte (1) fixées dans la longueur de ces bandes longitudinales (2) et qui produisent des signaux en réponse à la déformation à laquelle sont soumises les bandes longitudinales (2),
et
- lesdites jauges de contrainte (1) étant connectées aux moyens de traitement, lesdits moyens traitant ces signaux pour détecter les affaissements.

4. Voie ferroviaire (T) selon la revendication 3, **caractérisée en ce que** les jauges de contrainte (1) sont groupées pour fournir un signal commun, et **en ce qu'**il comprend des accéléromètres sismiques (4) agencés à des intervalles de chaque côté du ballast (5) et des moyens pour exploiter les signaux fournis par ces accéléromètres sismiques (4) lorsque des trains passent, afin de commander le fonctionnement correct des jauges de contrainte (1).

5. Voie ferroviaire (T) selon la revendication 4, **caractérisée en ce que** les accéléromètres sismiques (4) sont capables de détecter des effondrements profonds dans le sol.

6. Voie ferroviaire (T) selon la revendication 2, **caractérisée en ce que** les câbles transversaux opposés (3) sont raccordés par des barres de traction (20) agencées dans le ballast (5) sous la voie.

7. Voie ferroviaire (T) selon la revendication 2 ou 3 en association avec la revendication 2, **caractérisée en ce que** les bandes longitudinales et les câbles transversaux portant les jauges de contrainte scellées sont agencés directement sur le sol ou dans des excavations superficielles et sont recouverts.

8. Voie ferroviaire (T) selon les revendications 3, 4 ou 7, **caractérisée en ce que** les jauges de contrainte (1) sont fixées sur des bandes longitudinales de 5 mètres (2), quatre jauges de contrainte (1) par bande (2).

9. Voie ferroviaire (T) selon les revendications 2, 4 en association avec la revendication 2 ou 7, **caractérisée en ce que** les jauges de contrainte (1) sont fixées sur les câbles transversaux(3), deux jauges de contrainte (1) par câble transversal (3).

10. Voie ferroviaire (T) selon les revendications 2 et 3 en association avec la revendication 2, **caractérisée en ce que** chaque câble transversal (3) est fixé à une bande longitudinale (2).

11. Voie ferroviaire (T) selon la revendication 4 ou 5, **caractérisée en ce que** les accéléromètres sismiques (4) sont distribués approximativement un accéléromètre sismique (4) de chaque côté du ballast (5) tous les 150 mètres de ballast (5).

12. Voie ferroviaire (T) selon la revendication 4, **caractérisée en ce que** des stations de mesure (6) sont distribuées à des intervalles le long du ballast (5), chaque station de mesure (6) alimentant les jauges de contrainte (1), comprenant un microcontrôleur (18) avec une spécification locale, collectant les informations à partir des jauges de contrainte (1) et les accéléromètres sismiques (4) et communiquant par l'intermédiaire de fibre optique avec un système d'acquisition de données (10).

13. Voie ferroviaire (T) selon la revendication 1, **caractérisée en ce qu'**un signal d'alerte et de localisation est produit pour tout affaissement détecté dépassant un seuil prédéterminé.

14. Voie ferroviaire (T) selon la revendication 1, **caractérisée en ce que** les jauges de contrainte (1) et les accéléromètres (4) sont alimentés en utilisant deux sources indépendantes d'énergie électrique (19) commandées par deux microcontrôleurs indépendants (18) par longueur de ballast (5) égale à, au plus, 400 mètres.

15. Voie ferroviaire (T) selon la revendication 2, **caractérisée en ce que** les jauges de contrainte (1) sont fixées aux câbles transversaux (3) et aux bandes longitudinales (2) et les informations fournies par les jauges de contrainte (1) fixées à un même câble transversal (3) ou une même bande longitudinale (2) sont comparées aux mesures fournies par les accéléromètres sismiques (4) lorsque des trains passent pour confirmer l'état de fonctionnement des jauges de contrainte (1).
